# EUROPEAN PATENT SPECIFICATION

(11) **EP 4 657 018 B1**
(45) Date of publication and mention of the grant of the patent: **09.12.2026**
(21) Application number: 25758480.5
(22) Date of filing: 25.03.2025
(51) Int. Cl.: G01B 21/04, G01B 5/08, G01B 5/20, G01M 13/028

(54) **VALUE TRACEABILITY METHOD FOR INVOLUTE CURVE WITH LARGE BASE CIRCLE RADIUS**
WERTVERFOLGBARKEITSVERFAHREN FÜR EVOLVENTENKURVE MIT GROSSEM BASISKREISRADIUS
PROCÉDÉ DE TRAÇABILITÉ DE VALEURS POUR COURBE INVOLUTIVE À GRAND RAYON DE CERCLE DE BASE

(30) Priority: 29.03.2024 CN 202410375071
(43) Date of publication of application: 03.12.2025
(73) Proprietor: Xi'an Technological University, Xi'an, Shaanxi 710021 (CN)
(72) Inventor: WANG, Jianhua, Xi'an, Shaanxi 710021 (CN); ZHANG, Jialin, Xi'an, Shaanxi 710021 (CN); YIN, Peili, Xi'an, Shaanxi 710021 (CN); LI, Shaokang, Xi'an, Shaanxi 710021 (CN); JIANG, Bingqing, Xi'an, Shaanxi 710021 (CN); XU, Zhen, Xi'an, Shaanxi 710021 (CN); ZHANG, Yadong, Xi'an, Shaanxi 710021 (CN); SHEN, Yunbo, Xi'an, Shaanxi 710021 (CN); HE, Dongfeng, Xi'an, Shaanxi 710021 (CN); WANG, Xiaoli, Xi'an, Shaanxi 710021 (CN); CHEN, Xiaodong, Xi'an, Shaanxi 710021 (CN); ZHU, Qiang, Xi'an, Shaanxi 710021 (CN)
(74) Representative: Bayramoglu et al.
(86) International application number: PCT/CN2025/084597
(87) International publication number: WO 2025/201293

(56) References cited:
- EP-A2- 0 710 815
- CN-A- 102 937 409
- CN-A- 103 575 244
- CN-A- 107 101 570
- CN-A- 107 726 973
- CN-A- 111 060 061
- CN-A- 111 156 942
- CN-A- 118 999 441
- SU-A1- 1 272 092
- US-A1- 2005 086 025
- LI PING , SUN GUANGYU: "Determination of uncertainty parameters for tooth profile tilt deviation measurement", JOURNAL OF XI'AN TECHNOLOGICAL UNIVERSITY, vol. 29, no. 02, 15 April 2009 (2009-04-15), pages 122 - 124, XP093360488, DOI: 10.16185/j.jxatu.edu.cn.2009.02.009
- SUN YU-JIU , CUI YANMEI, LI TAO, LENG JIE, SHI HUISHENG: "Design and Accuracy Analysis of a Gear Measurement Center", METROLOGY & MEASUREMENT TECHNOLOGY, vol. 29, no. 6, 20 December 2009 (2009-12-20), pages 24 - 27 40, XP093360489, ISSN: 1674-5795
- LIN HU, FRANK HÖRTIG, KARIN KNIEL, SHI ZHAOYAO: "A Measurement Method for Large Gears Based on Portable Coordinate Measuring Machine", OPTICS AND PRECISION ENGINEERING, vol. 21, no. 7, 15 July 2013 (2013-07-15), CN , pages 1763 - 1770, XP093360490, ISSN: 1004-924X, DOI: 10.3788/OPE.20132107.1763

## Description

### TECHNICAL FIELD

The present invention belongs to the technical field of precision gear metrology, and specifically relates to a traceable metrology for large base circle radius involute measurements.

### BACKGROUND

The term "large gear" as used herein typically denotes a gear having a diameter greater than 500 mm. Specifically, gears with diameters ranging from 500 mm to 3000 mm are defined as large-sized gears, whereas gears with diameters exceeding 3000 mm are defined as giant gears. Large-sized and giant gear gears are widely utilized across multiple sectors, including marine vessels, heavy-lift helicopters, and renewable energy installations. Compared with conventional gear transmission devices, The gear transmission apparatus is characterized by: high power capacity (with single-shaft capacity ≥50 MW), massive dimensions (featuring gear diameters of 3-5 m), significant mass (with a single unit weighing up to several tens of tons), high accuracy (Grade 3-5), extended service life, and complex structural configurations. However, achieving precise control of tooth flank profiles, enhanced manufacturing accuracy, reduced vibration/noise, and increased power density all necessitates precision measurement techniques for large gears as a prerequisite. The critical factor in achieving precision measurement of large gears lies in ensuring the measurement accuracy of large gear metrology instruments.

For calibration of measurement accuracy in large gear measuring instruments, involute artifacts certified by National Metrology Institutes are typically employed for gear profile measurement. By comparing the measured values with the certified gear parameter values obtained from the artifact's metrological value transfer, the instrumental indications are corrected, thereby establishing traceable metrology for the gear profile measurement results of large gear measuring instruments.

Dalian University of Technology, Kyoto University (Japan), and the National Metrology Institute of Japan (NMIJ) have developed a dual-roller laser measurement involute reference device based on the rolling generation method. The device employs a laser interferometer to directly measure involute artifacts equipped with base circle disks, thereby achieving high-precision measurement of involute profiles with U(Fα, fHα, ffα)<0.5 µm. However, the method is limited by the size of the roller and can only be used for traceable metrology of involute tooth profiles with small-to-medium base circle parameters. The method is not applicable for traceable metrology of large gears with diameters exceeding 500 mm.

To achieve traceability for the involute tooth profile with a large base circle radius, the German PTB has established a coordinate measuring machine with dimensions of 5 m × 4 m × 2 m, incorporated the coordinate measuring machine into the length traceability chain, and developed a calibration software for three-dimensional measurement of standard gear. The measurement method obtains a volumetric position error mapping of tooth flank probing points in gear profile measurement tasks through length measurements using multiple laser tracker systems, achieves error correction for the tooth flank probing points, and provides measurement traceability based on laser frequency stabilization. However, the measurement accuracy of the method is limited, and the results have not yet met the evaluation criteria for Class 1 precision large involute gears.

Document CN 107 726 973 A describes a method of establishing the coordinate system of CMM with respect to the coordinate system of a large gear placed on a rotating table. First, the axis of rotation of the gear is established using a laser line and a target placed on the gear. A linear gauge is then placed over the gear and two opposite end faces of the gauge are accessed for being measured by the CMM by rotating the large gear by 180°.

Document CN 103 575 244 A describes a method for correcting the offset of a CMM probe with respect to the centre of rotation of the table supporting the gear, by measuring an involute calibration target placed directly onto the rotating table, in different rotational positions. Document CN 111 156 942 A describes a method of calibrating the CMM comprising a rotary table, using an involute calibration template placed directly onto the table.

Due to the lack of traceability for the involute tooth profile with a large base circle radius, a traceable metrology for large gears has not yet been established. As a result, corresponding large gear measuring instruments cannot be calibrated, and the accuracy of measurement results for involute tooth profiles of large-size gears (with diameters exceeding 500 mm) cannot be verified.

### SUMMARY

The present invention provides a traceable metrology for large base circle radius involute measurements, to overcome the problem in the prior art that the traceable metrology for involute tooth profiles with large base-circle radii can not be achieved.

To achieve the objective of the present invention, a solution provided by the present invention is: a traceable metrology for large base circle radius involute measurements, including the following steps:
Step 1. determining coordinate systems and metrological transfer parameters for traceable metrology;
establishing three coordinate systems: a gear workpiece coordinate system, a measurement coordinate system of a large gear measuring instrument, and a design coordinate system of an involute artifact;
determining the metrological transfer parameters: involute tooth profile cylindrical surfaces capable for metrological transfer, and datum surfaces used for spatial positioning;
Step 2. adjusting a pose of the involute artifact:
   placing the involute artifact together with a 6-DOF fine-tuning stage on an upper end surface of a tested gear;
   Step 3. adjusting a position of the involute artifact:
      measuring spatial positioning datum surfaces of the involute artifact using a spherical probe of the large gear measuring instrument, and aligning the design coordinate system with the measurement coordinate system of the involute artifact by the 6-DOF fine-tuning stage;
      Step 4. involute parameter calibration:
         during the calibration of involute parameters, the involute artifact rotates with the workpiece coordinate system, employing a tooth profile deviation measurement method, to measure and obtain a tooth profile deviation curve of the involute artifact, if the calibration criteria are met, the calibrated large gear measuring instrument is capable of performing involute tooth profile measurements;
         if the calibration criteria are not met, proceeding to the next step; and
         Step 5. eliminating a coordinate system establishment error to achieve measurement instrument calibration:
            identifying the coordinate system establishment error (Δx₀, Δy₀) by analyzing a tooth profile deviation measurement result *F_{α}*: ${F}_{α} = f \left(Δ{x}_{0},Δ{y}_{0}\right)$
            and correcting the established coordinate systems to align the measurement coordinate system with the workpiece coordinate system, then repeating Step 3 and Step 4 until meeting the calibration criteria, performing involute tooth profile measurements.

Compared with the prior art, the advantages of the present invention include:
1. The method provided by the present invention fills the technical gap in the traceable metrology method for large-size gears with diameters exceeding 500 mm. In the method of the present invention, the involute artifact is positioned spanning both the workpiece coordinate system and the measurement coordinate system. By measuring the involute artifact, the influence of coordinate system establishment error on the tooth profile measurement accuracy may be effectively identified, thereby effectively overcoming the common problems encountered in high-precision measurement of large gears.
2. The method may employ an artifact with a radius equal to the base circle radius of the tested gear to calibrate the measurement system, the calibrated measurement space encompasses the actual measurement space, enabling "one-to-one" and "point-to-point" calibration and correction of large gear measuring equipment at production sites, thereby improving the applicability of gear measurement instruments in complex environments such as on-machine measurement. However, such a method is not part of the claimed invention.
3. The method of the present invention ensures the relative positional relationship between an involute tooth flank and the center of a base circle through measurement and fine adjustment, thereby achieving high-precision measurement of the involute profile. Since the method provided by the present invention is employed, the corresponding involute artifact can be designed with a compact size, thereby avoiding the use of large artifacts whose precision stability is susceptible to temperature, gravity, and other factors-issues that would otherwise increase the uncertainty of measurement parameter transfer.
4. The present invention provides a measurement method which is simple and easy to implement, with high measurement accuracy, effectively meeting the calibration requirements of high-precision large gear measuring instruments and on-machine measurement systems for large gears. Furthermore, the method is convenient for transportation, installation and adjustment, demonstrating good market application prospects and promotion value.

### BRIEF DESCRIPTION OF THE DRAWINGS

FIG. 1 is a schematic diagram illustrating a principle of an involute measurement method based on the rolling generation;
FIG. 2 is a schematic structural view of an involute artifact used in an embodiment of the present invention;
FIG. 3 is an axonometric drawing taken from direction A of FIG. 2; and
FIG. 4 is a schematic diagram illustrating a traceable metrology method for an involute tooth profile with a large base circle radius.

List of reference characters: 1.involute tooth profile cylindrical surface; 2. datum bottom surface; 3. datum top surface; 4. root datum surface; 5. tip datum surface; 6. rotary table; 7. tested gear; 8. involute artifact; 9. large gear measuring instrument; and 10. 6-DOF fine-tuning stage.

### DETAILED DESCRIPTION OF THE EMBODIMENTS

The method of the present invention will be described in detail below with reference to the accompanying drawings.

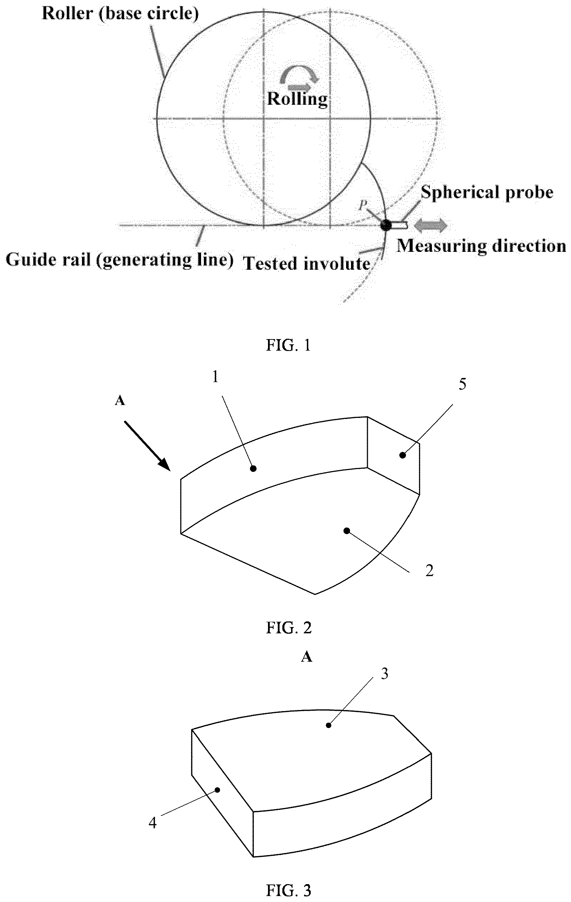

Referring to FIG. 1, this illustrates the principle of a conventional pure-rolling generating method in the prior art. The radius of the roller is equal to that of the base circle. When the roller performs the rolling on the guide rail, the position of the intersection point P between the standard involute and the generating line (guide rail) remains unchanged. By arranging a spherical probe at point P, measurement of the involute profile can be achieved. However, this method is limited by the roller's dimensions and is only applicable for traceable metrology of involute tooth profiles with small-to-medium base circle parameters within specific specifications.

A traceable metrology for large base circle radius involute measurements, specifically including the following steps:
Step 1. Coordinate systems and metrological transfer parameters for traceable metrology are determined:
When performing calibration of a gear measurement system with a calibration artifact, three coordinate systems need to be considered: a gear workpiece coordinate system, a measurement coordinate system of a large gear measuring instrument 9, and a design coordinate system of an involute artifact 8.

The metrological transfer parameters: involute tooth profile cylindrical surfaces 1 capable of metrological transfer, and datum surfaces used for spatial positioning are determined, with calibration values certified by the National Metrology Institute.

In accordance with the foregoing requirements, the structure of the involute artifact 8 provided in the embodiment of the present invention is as follows: referring to FIG. 1 and FIG. 2, the structure comprises: two opposedinvolute tooth profile cylindrical surfaces 1 configured for metrological transfer, a datum bottom surface 2 and a datum top surface 3 symmetrically disposed on upper and lower sides respectively for spatial positioning, and a root datum surface 4 and a tip datum surface 5 parallelly arranged on front and rear sides, wherein the involute artifact 8 comprises calibration values certified by the National Metrology Institute.

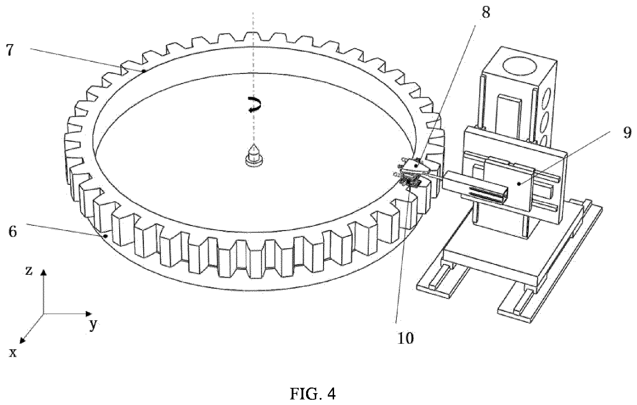

Step 2. A pose of the involute artifact is adjusted:
Referring to FIG. 4, during measurement, the involute artifact 8 certified by the National Metrology Institute with traceable calibration values is mounted together with a 6-DOF fine-tuning stage 10 onto a top surface of a tested gear 7. By adjusting the 6-DOF fine-tuning stage 10, the involute artifact 8 is enabled to perform: (i) minute rotations about X-, Y-, and Z-axes; and (ii) linear translations along X-, Y-, and Z-directions.

Step 3. A position of the involute artifact is adjusted:
The datum surfaces for spatial positioning of the involute artifact 8 are measured by a spherical probe of the large gear measuring instrument 9, and the design coordinate system of the involute artifact 8 is aligned with the measurement coordinate system through the 6-DOF fine-tuning stage 10.

The spatial position of the involute artifact 8 in the measurement coordinate system is ensured through measurement by the large gear measuring instrument 9. Since the involute artifact 8 is actually mounted on a rotary table 6, the involute artifact is rotatable about the workpiece rotation axis and consequently exists within the gear workpiece coordinate system. Therefore, the involute artifact spans both the measurement coordinate system and the gear workpiece coordinate system.

Step 4. Involute parameter calibration:
During the calibration of involute parameters, the involute artifact 8 rotates with the workpiece coordinate system, and a tooth profile deviation measurement method is employed to measure and obtain a tooth profile deviation curve of the involute artifact 8. If the calibration measurement results are verified to: (i) match the certified values of the involute artifact 8; or (ii) fall within the permissible error range of the large gear measuring instrument 9, the calibrated large gear measuring instrument 9 is authorized to perform involute profile measurements; and
if the calibration criteria are not met, the next step is performed.

Step 5. A coordinate system establishment error is eliminated to achieve measurement instrument calibration:
In practical operation, workpiece mounting eccentricity and instrument geometric errors can be detected through alternative methods and subsequently eliminated or corrected. The measurement discrepancies are primarily caused by potential misalignment between the measurement coordinate system and the rotation axis of the rotary table 6, which is inherently difficult to determine and commonly exists in the large gear measuring instrument 9.

The coordinate system establishment error (Δ*x*₀,Δ*y*₀) are identified by analyzing a tooth profile deviation measurement result *F_{α}* : ${F}_{α} = f \left(Δ{x}_{0},Δ{y}_{0}\right)$

The established coordinate system is iteratively adjusted until: (i) the slope error is made equal to the certified value of the involute artifact 8; or (ii) the deviation is reduced to within the permissible error range of the instrument, which indicates that the measurement coordinate system coincides with the workpiece coordinate system, and the calibration criteria are met, then the above steps are repeated, after the calibration of the large gear measuring instrument 9 is completeed, the involute tooth profile measurement is performed.

The foregoing has outlined the technical methods and embodiments of the present invention. However, the protection scope of the invention shall only be limited by the appended claims.

## Claims

1. A traceable metrology for large base circle radius involute measurements, comprising the following steps:
Step 1. determining coordinate systems and metrological transfer parameters for traceable metrology;
establishing three coordinate systems: a gear workpiece coordinate system, a measurement coordinate system of a large gear measuring instrument (9), and a design coordinate system of an involute artifact (8);
determining the metrological transfer parameters: involute tooth profile cylindrical surfaces (1) capable for metrological transfer, and datum surfaces used for spatial positioning;
Step 2. adjusting a pose of the involute artifact (8):
placing the involute artifact (8) together with a 6-DOF fine-tuning stage (10) on an upper end surface of a tested gear (7);
Step 3. adjusting a position of the involute artifact (8):
measuring a spatial reference surface of the involute artifact (8) using a spherical probe of the large gear measuring instrument (9), and aligning the design coordinate system with the measurement coordinate system of the involute artifact (8) by the 6-DOF fine-tuning stage (10);
Step 4. involute parameter calibration:
during the calibration of involute parameters, the involute artifact (8) rotates with the workpiece coordinate system, employing a tooth profile deviation measurement method, to measure and obtain a tooth profile deviation curve of the involute artifact (8), if the calibration criteria are met, the calibrated large gear measuring instrument (9) is capable of performing involute tooth profile measurements;
if the calibration criteria are not met, proceeding to the next step; and
Step 5. eliminating a coordinate system establishment error to achieve measurement instrument calibration:
identifying the coordinate system establishment error (Δ*x*₀,Δ*y*₀) by analyzing a tooth profile deviation measurement result *F_{α}*: ${F}_{α} = f \left(Δ{x}_{0},Δ{y}_{0}\right)$
and correcting the established coordinate systems to align the measurement coordinate system with the workpiece coordinate system, then repeating Step 3 and Step 4 until meeting the calibration criteria, performing involute tooth profile measurements.

## Patentansprüche

1. Eine rückführbare Messtechnik für Evolventenmessungen mit großem Grundkreisradius, umfassend die folgenden Schritte:
Schritt 1. Bestimmen von Koordinatensystemen und messtechnischen Übertragungsparametern für die rückführbare Messtechnik;
Einrichten von drei Koordinatensystemen: einem Zahnradwerkstückkoordinatensystem, einem Messkoordinatensystem eines Großzahnradmessgeräts (9) und einem Konstruktionskoordinatensystem eines Evolventennormals (8);
Bestimmen der messtechnischen Übertragungsparameter: Evolventenzahnprofil-Zylinderflächen (1), die für eine messtechnische Übertragung geeignet sind, und Bezugsflächen, die zur räumlichen Positionierung verwendet werden;
Schritt 2. Einstellen einer Lage des Evolventennormals (8):
Platzieren des Evolventennormals (8) zusammen mit einem 6-DOF-Feineinstelltisch (10) auf einer oberen Stirnfläche eines zu prüfenden Zahnrads (7);
Schritt 3. Einstellen einer Position des Evolventennormals (8):
Messen einer räumlichen Referenzfläche des Evolventennormals (8) unter Verwendung eines Kugeltasters des Großzahnradmessgeräts (9) und Ausrichten des Konstruktionskoordinatensystems auf das Messkoordinatensystem des Evolventennormals (8) mittels des 6-DOF-Feineinstelltisches (10);
Schritt 4. Kalibrieren von Evolventenparametern:
während der Kalibrierung von Evolventenparametern rotiert das Evolventennormal (8) mit dem Werkstückkoordinatensystem, wobei ein Zahnprofilabweichungsmessverfahren eingesetzt wird, um eine Zahnprofilabweichungskurve des Evolventennormals (8) zu messen und zu erhalten, wenn die Kalibrierkriterien erfüllt sind, ist das kalibrierte Großzahnradmessgerät (9) in der Lage, Evolventenzahnprofilmessungen durchzuführen;
wenn die Kalibrierkriterien nicht erfüllt sind, Fortfahren mit dem nächsten Schritt; und
Schritt 5. Eliminieren eines Koordinatensystemeinrichtungsfehlers, um eine Messgerätekalibrierung zu erreichen:
Identifizieren des Koordinatensystemeinrichtungsfehlers (Δ*x*₀,Δ*y*₀) durch Analysieren eines Zahnprofilabweichungsmessergebnisses *Fₐ*: ${F}_{a} = f \left(Δ{x}_{0},Δ{y}_{0}\right)$
und Korrigieren der eingerichteten Koordinatensysteme, um das Messkoordinatensystem auf das Werkstückkoordinatensystem auszurichten, anschließend Wiederholen von Schritt 3 und Schritt 4, bis die Kalibrierkriterien erfüllt sind, Durchführen von Evolventenzahnprofilmessungen.

## Revendications

1. Métrologie traçable pour des mesures de développante avec un cercle de base à grand rayon, comprenant les étapes suivantes :
Étape 1. détermination de systèmes de coordonnées et de paramètres de transfert métrologique pour métrologie traçable ;
établissement de trois systèmes de coordonnées : un système de coordonnées d'ébauche de pièce d'engrenage, un système de coordonnées de mesure d'un instrument de mesure de grand engrenage (9) et un système de coordonnées de conception d'un artefact à développante (8) ;
détermination des paramètres de transfert métrologique : des surfaces cylindriques de profil de dent à développante (1) susceptibles de transfert métrologique et des surfaces de référence utilisées pour le positionnement spatial ;
Étape 2. ajustement d'une pose de l'artefact à développante (8) :
placement de l'artéfact à développante (8) avec un étage de réglage fin à 6 degrés de liberté (10) sur une surface d'extrémité supérieure d'un engrenage testé (7) ;
Étape 3. ajustement d'une position de l'artefact à développante (8) :
mesure d'une surface de référence spatiale de l'artefact à développante (8) à l'aide d'une sonde sphérique de l'instrument de mesure de grand engrenage (9) et alignement du système de coordonnées de conception avec le système de coordonnées de mesure de l'artefact à développante (8) par l'étage de réglage fin à 6 degrés de liberté (10) ;
Étape 4. étalonnage de paramètre de développante :
pendant l'étalonnage de paramètres de développante, l'artefact à développante (8) tourne avec le système de coordonnées d'ébauche de pièce, emploi d'un procédé de mesure d'écart de profil de dent, pour mesurer et obtenir une courbe d'écart de profil de dent de l'artefact à développante (8), si les critères d'étalonnage sont satisfaits, l'instrument de mesure de grand engrenage étalonné (9) est capable d'effectuer des mesures de profil de dent à développante ;
si les critères d'étalonnage ne sont pas satisfaits, passage à l'étape suivante ; et
Étape 5. élimination d'une erreur d'établissement de système de coordonnées pour compléter un étalonnage d'instrument de mesure :
identification de l'erreur d'établissement de système de coordonnées (Δ*x*₀,Δ*y*₀) en analysant un résultat de mesure d'écart de profil de dent *Fₐ*: ${F}_{a} = f \left(Δ{x}_{0},Δ{y}_{0}\right)$
et correction des systèmes de coordonnées établis pour aligner le système de coordonnées de mesure avec le système de coordonnées d'ébauche de pièce, puis répétition de l'Étape 3 et de l'Étape 4 jusqu'à la satisfaction des critères d'étalonnage, réalisation de mesures de profil de dent à développante.
